## Europäisches Patentamt

## European Patent Office

## Office européen des brevets

(11) Veröffentlichungsnummer: **0 294 731**
**A2**

# (12) EUROPÄISCHE PATENTANMELDUNG

(21) Anmeldenummer: **88108970.0**

(22) Anmeldetag: **04.06.88**

(51) Int. Cl.4: **B23Q 7/14 , B65G 54/02 , B60L 15/00**

(30) Priorität: **06.06.87 DE 3719060**
**08.07.87 DE 3722524**

(43) Veröffentlichungstag der Anmeldung:
**14.12.88 Patentblatt 88/50**

(84) Benannte Vertragsstaaten:
**DE ES FR GB IT**

(71) Anmelder: **Johann A. Krause Maschinenfabrik GmbH**
**Betonstrasse 31**
**D-2820 Bremen-Farge(DE)**

(72) Erfinder: **Kuckelsberg, Karl-Wilhelm, Dipl.-Ing.**
**Vorlöhnhorster Weg 60**
**D-2822 Schwanewede 1(DE)**
Erfinder: **Badur, Klaus, Dipl.-Ing.**
**Schulenkamp 14**
**D-3008 Garbsen-Berenbostel 4(DE)**
Erfinder: **Armbruster, Norbert, Dipl.-Ing.**
**Georg-Gröning-Strasse 84 a**
**D-2800 Bremen 1(DE)**

(74) Vertreter: **Möller, Friedrich, Dipl.-Ing. et al**
**Meissner, Bolte & Partner Patentanwälte**
**Hollerallee 73**
**D-2800 Bremen 1(DE)**

(54) **Produktionsstrasse sowie Verfahren zur Produktion von Werkstücken auf derselben.**

(57)    2.1. Bei Produktionsstraßen ist es üblich, daß die Werkstücke auf Transporteinrichtungen nacheinander zu den einzelnen Arbeitsstationen verfahren werden. Nachteilig hieran ist, daß zur genauen Positionierung von Produktionsorganen diese durch die Arbeitsstationen auch noch in der Förderrichtung der Transporteinrichtungen verfahrbar sein müssen. Dieser zusätzliche Aufwand soll durch das erfindungsgemäße Verfahren und die Produktionsstraße zur Durchführung desselben vermieden werden.

2.2. Verfahrensmäßig sieht die Erfindung vor, daß innerhalb einer entsprechenden Arbeitsstation das Werkstück durch die Transporteinrichtung mindestens in eine der zu erfolgenden Produktion entsprechende Position verfahren wird. Erfindungsgemäß erfolgt eine Weiterbildung der Produktionsstraße dadurch, daß selbstfahrenden Werkstückträgern der Transporteinrichtung eine Meßeinrichtung und/oder eine Steuerungs- bzw. Regelungseinrichtung zugeordnet ist. Als Antrieb wird vorzugsweise ein Langstator-Linearmotor verwendet.

2.3. Die Erfindung ist sowohl an Transferstraßen als auch für verkettete bzw. flexible Produktions- bzw. Montagesysteme.

## Produktionsstraße sowie Verfahren zur Produktion von Werkstücken auf derselben

Die Erfindung betrifft ein Verfahren zur Produktion von Werkstücken auf Produktionsstraßen gemäß dem Oberbegriff des Anspruchs 1 sowie eine Produktionsstraße zur Durchführung des Verfahrens gemäß dem Oberbegriff des Anspruchs 8.

Produktionsstraßen der hier angesprochenen Art dienen zu Bearbeitungen bzw. Montagen an Werkstücken. Die Werkstücke werden üblicherweise auf Werkstückträgern der Transporteinrichtung, die die Arbeitsstationen verbindet, angeordnet.

Hierzu sind bereits Transporteinrichtungen bekannt, die über Förderer, beispielsweise Friktionsrollenbahnen, verfügen, von denen die sich auf den Werkstückträgern befindenden Werkstücke zu den einzelnen Arbeitsstationen transportierbar sind. Des weiteren sind Transporteinrichtungen bekannt, die über eine ortsfeste Fürungsbahn verfügen, auf denen einzeln angetriebene Werkstückträger (Paletten), die mit einem eigenen Antrieb versehen, verfahrbar sind. In diesem Fall dient die Führungsbahn, die selbst über keinen Antrieb verfügt, lediglich als Schiene für die Werkstückträger.

Diese bekannten Transporteinrichtungen haben den Nachteil, daß hiermit die Werkstücke bzw. die denselben zugeordneten Werkstückträger in eine vorbestimmte Position zu den entsprechenden Arbeitsstationen gebracht werden, die aber keinen Bezug zu der am Werkstück vorzunehmenden Bearbeitung bzw. Montage hat. Demzufolge muß die Arbeitsstation selbst so ausgebildet sein, daß sie in Transportrichtung der Werkstücke bzw. Werkstückträger verfahrbar ist, um die gewünschte Bearbeitung bzw. Montage am Werkstück vornehmen zu können.

Hiervon ausgehend liegt der Erfindung die Aufgabe zugrunde, eine Produktionsstraße und ein Verfahren zur Produktion von Werkstücken an derselben zu schaffen, welche bzw. welches den Transportaufwand der Werkstücke bzw. die Verfahrbarkeit von Arbeitsstationen bzw. Fertigungsorganen derselben minimiert.

Zur Lösung dieser Aufgabe weist das Verfahren die Merkmale des Anspruchs 1 auf. Dadurch, daß der Werkstückträger mit dem Werkstück längs seiner Bewegungsrichtung im Bereich der Arbeitsstation in all diejenigen Positionen relativ zur Arbeitsstation verfahren wird, die der zu erfolgenden Fertigung, vorzugsweise aller Fertigungsvorgänge innerhalb der bestimmten Arbeitsstation, entspricht, kann an der Bearbeitungsstation eine Bewegungsachse, nämlich längs der Transportrichtung der Werkstücke bzw. Werkstückträger eingespart werden. Die Arbeitsstationen können demnach einfacher ausgebildet sein. Des weiteren läßt sich hiermit die gesamte Produktionsstraße verkürzen, also ein wertvoller Platzgewinn erzielen, da ein Verfahren der Arbeitsstationen in Transportrichtung der Werkstücke bzw. Werkstückträger nicht mehr erforderlich wird, d.h., die Arbeitsstationen dichter zusammengerückt werden können. Schließlich ist mit dem erfindungsgemäßen Verfahren auch ein Zeitgewinn verbunden, da anders als beim Stand der Technik nicht erst die Werkstückträger in einer bestimmten Position zur jeweiligen Arbeitsstation indexiert werden müssen und anschließend ein Verfahren der Arbeitsstation selbst noch in Transportrichtung des Werkstücks zu erfolgen hat.

Zweckmäßigerweise wird das Verfahren des Werkstückträgers mit dem Werkstück im Bereich der jeweiligen Arbeitsstationen auf die Produktionsabläufe derselben abgestimmt. Somit erfolgt erfindungsgemäß eine Synchronisation der Bewegungen des Werkstücks auf dem Werkstückträger einerseits und der Bewegungen der jeweiligen Arbeitsstation, insbesondere eines mit entsprechenden Greifern oder Werkzeugen versehenen Produktionsorgans andererseits. Dadurch wird im Bereich der jeweiligen Arbeitsstation eine Einbeziehung der Bewegungen des Werkstückträgers in die Steuerung bzw. Regelung der betreffenden Arbeitsstation geschaffen.

Vorzugsweise findet eine Synchronisation des Werkstückträgers im Bereich der Arbeitsstation zu den Produktionsabläufen derselben zeitlich und/oder wegmäßig statt. Dazu werden alle erforderlichen Steuerungsparameter erfaßt, die zur einer fertigungsabhängigen Fortbewegung des Werkstücks bzw. des Werkstückträgers notwendig sind, und zwar hinsichtlich der Folge der zueinander an einer Arbeitsstation durchzuführenden Bearbeitungen bzw. Montagevorgänge.

Wenn alle Fertigungspositionen in Transportrichtung des Werkstückträgers hintereinander liegen, brauchen die Produktionsorgane an den Bearbeitungsstationen nur noch Vor schubbewegungen auszuführen. Für komplexere Bearbeitungs-bzw. Montagevorgänge ist es aber auch denkbar, daß die entsprechenden Arbeitsstationen in einer oder auch zwei quer zueinander verlaufenden Bewegungsachsen, die wiederum beide quer zur Transportrichtung des Werkstückträgers gerichtet sind, bewegbar ausgebildet sind. Schließlich ist es auch möglich, daß die Arbeitsstationen in einer längs zur Transportrichtung der Werkstückträger verlaufenden Bewegungsachse zusätzlich bewegt werden. Dann können sowohl Werkstückträger als auch die Produktionsorgane an den Arbeitsstationen zur gleichen Zeit verfahren werden, um längere Verfahrwege von einer Bearbeitungs- bzw. Montageposition zur anderen kurzfristig und somit zeitsparend abzufahren.

Bei einer besonders vorteilhaften Weiterbildung des erfindungsgemäßen Verfahrens erfolgt eine Steuerung bzw. Regelung der Bewegungen des Werkstückträgers im Bereich der Arbeitsstationen durch jeweils diejenige Arbeitsstation, in der sich der Werkstückträger mit dem Werkstück gerade befindet. Dabei können nach einem vorgegebenen Schema nacheinander die entsprechenden Bearbeitungs- bzw. Montagepositionen relativ zur Arbeitsstation angefahren werden, und zwar sowohl durch Vorwärts- als auch durch Rückwärtsbewegungen des Werkstückträgers auf der Führungsbahn. Im Bereich einer jeweiligen Arbeitsstation sind dadurch die Bewegungsabläufe des Werkstückträgers voll in die Arbeitsstation integriert, übernehmen also uneingeschränkt eine Bewegungsachse der Arbeitsstation.

Nach einer weiteren Ausgestaltung des erfindungsgemäßen Verfahrens werden die Werkstückträger mittels eines Linearmotors verfahren und/oder positioniert. Vorzugsweise wird ein Langstator-Linearmotor verwendet. Bei diesem wird der Stator auf der Führungsbahn und das Reaktionsteil auf dem Werkstückträger angeordnet. Der Stator ist somit zwangsläufig so lang wie die Führungsbahn. Der Linearmotor leistet sowohl das Beschleunigen, Verfahren wie auch Bremsen des Werkstückträgers berührungslos. Das bewegte Teil, der Werkstückträger, benötigt keine elektrische Installation. Linearmotoren zeichnen sich ferner durch eine hohe Positionsgenauigkeit von weniger als 0,1 mm aus, die durch entsprechend aufwendigere Meßsysteme sogar noch gesteigert werden kann. Die Identifizierung des Werkstückträgers ist ohne Schreib-Lese-Einheiten und Datenträger möglich. Schließlich ist die Antriebssteuerung beliebig einstellbar, die Komponenten arbeiten verschleißfrei und sind aufgrund der Tatsache, daß keine mechanisch bewegten Teile verwendet werden, wartungsfrei. Weiterhin besitzen Linearmotoren einen geringen Energieverbrauch durch den sehr guten Wirkungsgrad von 85 %. Ein Kollisionsschutz bei Stromausfall ist automatisch gegeben, gleichwohl können noch mechanische Bremsen zusätzlich am Fahrweg installiert werden.

Nach einer weiteren Ausgestaltung der Erfindung werden unterhalb des Werkstückträgers Sekundärkörper aus ferromagnetischem Weicheisen oder Permanentmagnete angeordnet, deren Pollage durch in der Führungsbahn installierte Sensoren erfaßt und dementsprechend über einen Umrichter der Linearmotorschub durch Variation der Spannung und der Frequenz gesteuert werden kann. Selbstverständlich sind mit dem Linearmotor Vor - wie Rückwärtsbewegungen möglich.

Die zur Lösung der Aufgabe dienende Produktionsstraße ist durch die Merkmale des Anspruchs 8 gelöst. Dadurch, daß erfindungsgemäß eine Meßeinrichtung und/oder die Regelungs-bzw. Steuerungseinrichtung vorgesehen ist, können diese Einrichtungen, die beim Stand der Technik an jeder Arbeitsstation erforderlich sind, entfallen. Die Arbeitsstationen können dadurch in ihrem Aufbau einfacher, vor allem kompakter gehalten werden. Darüber hinaus ersetzt die Meßeinrichtung die bei den bekannten Werkstückträgern erforderlichen Positionier- bzw. Indexiereinrichtungen.

Zweckmäßigerweise sind die Meß- bzw. Regelungs/Steuereinrichtungen den Werkstückträgern zugeordnet. Dann können diese unabhängig von der Steuerung der Produktionsmaschine verfahren werden, so daß sie praktisch autark sind. Dabei ist es besonders vorteilhaft, wenn die Regelungs- bzw. Steuerungseinrichtung frei programmierbar ist.

Die Meßeinrichtungen können als direkte Meßsysteme (Maßstab bzw. Maßband) oder als indirekte Meßsysteme (Winkelgeber über z.B. Zahnstange und Ritzel) ausgebildet sein, und zwar sowohl absolut als auch indirekt messend.

Die weiteren Unteransprüche betreffen Weiterbildungen der erfindungsgemäßen Vorrichtung, die sich im wesentlichen auf die Ausbildung und Anordnung der Meß- sowie Steuerungs-/Regelungseinrichtungen und die Energieversorgung derselben bzw. des Antriebs der Werkstückträger beziehen.

Insbesondere besitzt die Produktionsstraße Vorteile, bei der die Führungsbahn als Langstator ausgebildet ist und an der Unterseite der Werkstückträger Reaktionsteile, vorzugsweise aus ferromagnetischem Weicheisen bestehende Sekundärkörper, angeordnet sind. Hierdurch ist es möglich, die Bewegung der Werkzeugträger auf der Produktionsstraße durchführen zu können, ohne daß die bewegten Teile mit Antriebsenergie versorgt werden müssen.

Für den Antrieb eines Linearmotors ist die Stellung der Sekundärkörper bzw. Permanentmagnete relativ zum Stator von Bedeutung. Daher sind an der Führungsbahn mit gleichmäßigem Abstand Sensoren installiert, welche die jeweilige Pollage ermitteln und über eine geeignete Steuerung Strom entsprechender Spannung, Frequenz und Phasenlage in die Führungsbahn einspeisen.

Vorzugsweise sollte der Luftspalt zwischen der als Stator dienenden Führungsbahn und dem Reaktionsteil kleiner als 6 mm sein.

Bevorzugte Ausführungsbeispiele der Erfindung werden nachfolgend anhand der Zeichnungen näher erläutert. In dieser zeigen:

Fig. 1 eine schematische Grundrißdarstellung einer erfindungsgemäß weitergebildeten Produktionsstraße

Fig. 2 einen vergrößert dargestellten - schematischen Grundriß eines Werkstückträgers im Bereich einer Arbeitsstation,

Fig. 3 eine Grundrißdarstellung eines weiteren Werkstückträgers mit einer frei programmierbaren Steuerungseinrichtung, und

Fig. 4 eine Fertigungsstraße, auf der der Werkstückträger mittels eines Langstator-Linearmotors verfahren und/oder positioniert wird, in vereinfachter Seitenansicht, und

Fig. 5 die mit einem Langstator-Linearmotor versehene Produktionsstraße gemäß Fig. 4 in vergrößertem Querschnitt.

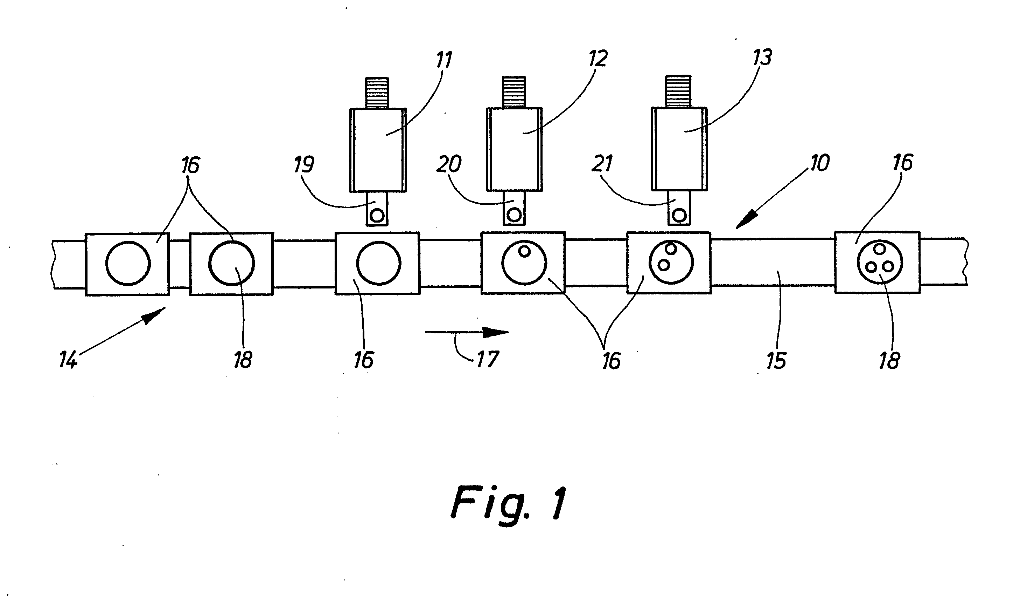

Die Erfindung bezieht sich auf eine in der Fig. 1 stark vereinfacht dargestellte Produktionsstraße 10 zur Bearbeitung von Werkstücken, die im gezeigten Ausführungsbeispiel über drei nebeneinanderliegende Arbeitsstationen 11, 12 und 13 verfügt, die durch eine Transporteinrichtung 14 miteinander verbunden sind. Die Transporteinrichtung 14 besteht aus einer ortsfest, geradlinigen Führungsbahn 15, auf der eine Mehrzahl von Werkstückträgern 16 in Richtung des Pfeils 17 verfahrbar angeordnet sind. Der Antrieb der auf der Führungsbahn 15 verfahrbaren Werkstückträger 16 erfolgt von den Werkstückträgern 16 aus, d.h., jeder Werkstückträger 16 verfügt über einen eigenen separaten Antrieb, der in der Fig. 1 nicht gezeigt ist. Auf jedem der Werkstückträger 16 ist in üblicher Weise ein schematisch dargestelltes Werkstück 18 angeordnet. Ggf. können auch mehrere Werkstücke auf jedem Werkstückträger 16 angeordnet sein. Über einen prinzipiell gleichen Aufbau verfügt eine Fertigungsstraße zur Durchführung von Montagevorgängen an Werkstücken.

Die Bewegungen der Werkstückträger 16 auf der Führungsbahn 15 in Richtung des Pfeils 17 ersetzen erfindungsgemäß eine Bewegung der Arbeitsstationen 11 bis 13, nämlich der im vorliegenden Fall daran angeordneten Bearbeitungswerkzeuge 19, 20 bzw. 21 in Richtung des Pfeils 17 bzw. entgegengesetzt dazu. Demzufolge werden die Werkstückträger 16 durch ihren Antrieb in eine oder mehrere Positionen der jeweils an der betreffenden Arbeitsstation 11, 12 oder 13 zu erfolgenden Bearbeitung oder Bearbeitungen gebracht. Zweckmäßigerweise werden zu diesem Zweck die Bewegungen der Werkstückträger 16 mit zumindest den Vorschubbewegungen der Bearbeitungswerkzeuge 19, 20 bzw. 21 koordiniert. Es ist aber denkbar, daß zusätzlich zur Bewegung der Werkstückträger 16 in Richtung des Pfeils 17 die Arbeitsstationen 11 bis 13 bzw. die Bearbeitungswerkzeuge 19 bis 21 derselben zu den Vorschubbewegungen weitere Bewegungen, sowohl quer zur Bewegung des Werkstückträgers 16 in Richtung des Pfeils 17 als auch parallel dazu, durchführen.

Je nach der zu erfolgenden Bearbeitung sind für die Werkstückträger 16 und die Bearbeitungswerkzeuge 19..21 an den Arbeitsstationen 11..13 folgende Bewegungskombinationen möglich, die - soweit sie sich auf die Arbeitsstationen 11..13 beziehen - auch Vorschubbewegungen sein können:
- Bewegung der Werkstückträger 16 in Richtung des Pfeils 17,
Bewegung der Bearbeitungswerkzeuge 19..21 nur in horizontaler Richtung quer zur Transportrichtung der Werkstückträger 16 (Vorschubbewegung);
- Bewegung der Werkstückträger 16 in Richtung des Pfeils 17,
Bewegung der Bearbeitungswerkzeuge 19..21 quer zur Transportrichtung der Werkstückträger 16, und zwar sowohl in horizontaler als auch vertikaler Richtung;
- Bewegung der Werkstückträger 16 in Richtung des Pfeils 17,
Bewegung der Bearbeitungswerkzeuge 19..21 horizontal und vertikal quer zur Transportrichtung der Werkstückträger 16 und zusätzlich sowohl in als ggf. auch gegen die Transportrichtung der Werkstückträger 16;
- Bewegung der Werkstückträger 16 sowohl in Richtung des Pfeils 17 als auch engegengesetzt dazu,
Bewegung der Bearbeitungswerkzeuge 19..21 gemäß einer der vorstehend genannten Möglichkeiten.

Zur Koordinierung der Bewegungen der Werstückträger 16 der Arbeitsstationen 11..13 bzw. der daran angeordneten Bearbeitungswerkzeuge 19..21 dienen entsprechende Meßeinrichtungen 22 und/oder Regelungs- bzw. Steuerungseinrichtungen, die vorzugsweise jedem der Werkzeugträger 16 zugeordnet sind, alternativ aber auch komplett oder teilweise zentral oder im Bereich der jeweiligen Arbeitsstation 11.13 stationiert sein können. Die Fig, 2 und 3 zeigen Möglichkeiten zur Anordnung der Meßeinrichtung 22 bzw. der Steuerungseinrichtung 23 am Werkstückträger 16.

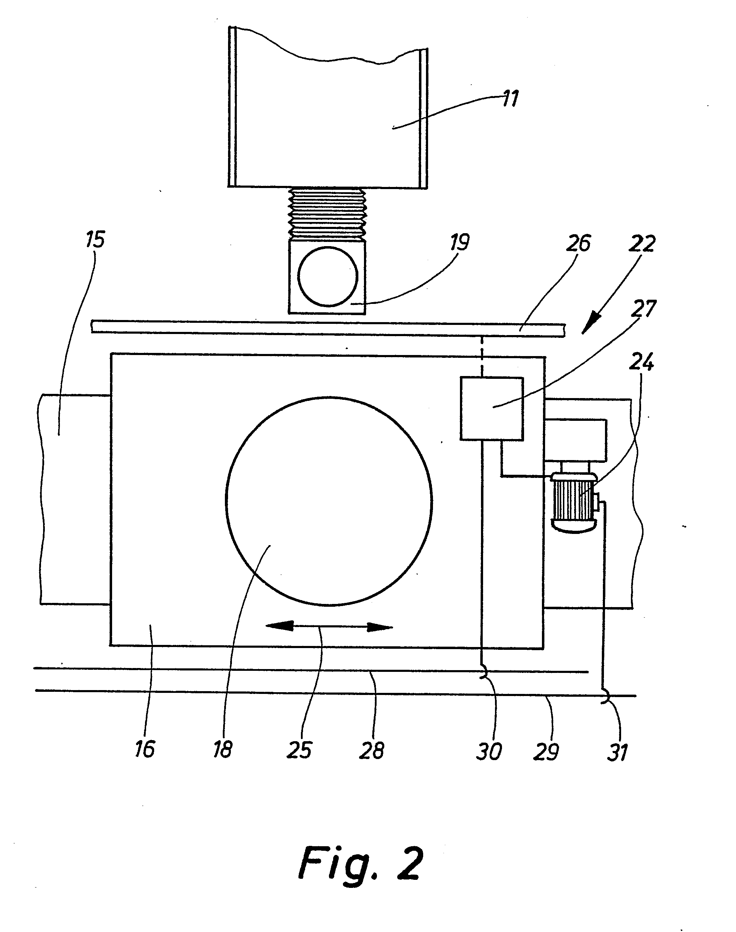

Aus der Fig. 2 ist ein Werkstückträger 16 im Bereich der Arbeitstation 11 ersichtlich. Hier ist dem Werkstückträger 16 lediglich die Meßeinrichtung 22 zugeordnet, die mit einem Antrieb, nämlich einem Elektromotor 24 gekoppelt ist, derart, daß die solange Vor- bzw. Rückwärtsfahrimpulse in Richtung des Doppelpfeils 25 an den Elektromotor 25 abgibt, bis der Werkstückträger 16 bzw. das darauf angeordnete Werkstück 18 die für eine bestimmte Bearbeitung gewünschte Position in bezug auf die Arbeitsstation 11 eingenommen hat.

Die Meßeinrichtung 22 ist im vorliegenden Ausführungsbeispiel als lineare Meßeinrichtung ausgebildet, und zwar besteht sie aus einem handelsüblichen magnetischen Längenmeßsystem. Dieses verfügt über ein periodisch magnetisiertes Maßband, das auf einem Maßband-Träger 26 ortsfest neben dem Werkstückträger 16 im Bereich der Arbeitsstation 11 angeordnet ist. Ein zu diesem magnetischen Längenmeßsystem gehörender Abtastkopf 27 befindet sich auf dem Werkstückträger 16. Durch Interpolation fährt diese Meßeinrichtung 22 die gewünschte(n) Position(en) zur jeweiligen Arbeitsstation 11..13 an.

Dieses kann durch Setzen entsprechender Signale in einer zur Meßeinrichtung 22 gehörenden Auswerteinrichtung geschehen. In diesem Falle erfolgt ein vorprogrammiertes Verfahren des Werkstückträgers 16 im Bereich der Arbeitsstation 11 unabhängig von der Steuerung der Arbeitsstation 11. Die Vorgabedaten der Sollposition können hierbei drahtlos in entsprechende Datenträger des Werkstückträgers 16 einprogrammiert werden. Die Synchronisation erfolgt hier somit in einfachster Weise dadurch, daß der Maßband-Träger 26 in einer bestimmten Position (Nullpunkt) an der Arbeitsstation 11 angeordnet wird.

Alternativ kann die Meßeinrichtung 22 auch optische und rotatorische Meßorgane handelsüblicher Art aufweisen.

Der Fig. 2 ist weiterhin zu entnehmen, daß die Energieversorgung des Elektromotors 24 und der Meßeinrichtung 22 durch zwei separate Schleifleitungen 28 und 29 erfolgt. Dazu wird von der Schleifleitung 28 über einen entsprechenden Schleifkontakt 30 die Energiezufuhr für den Abtastkopf 27 der Meßeinrichtung abgegriffen, während die Energie für den Elektromotor 24 von einem weiteren Schleifkontakt 31 von der Schleifleitung 29 abgegriffen wird.

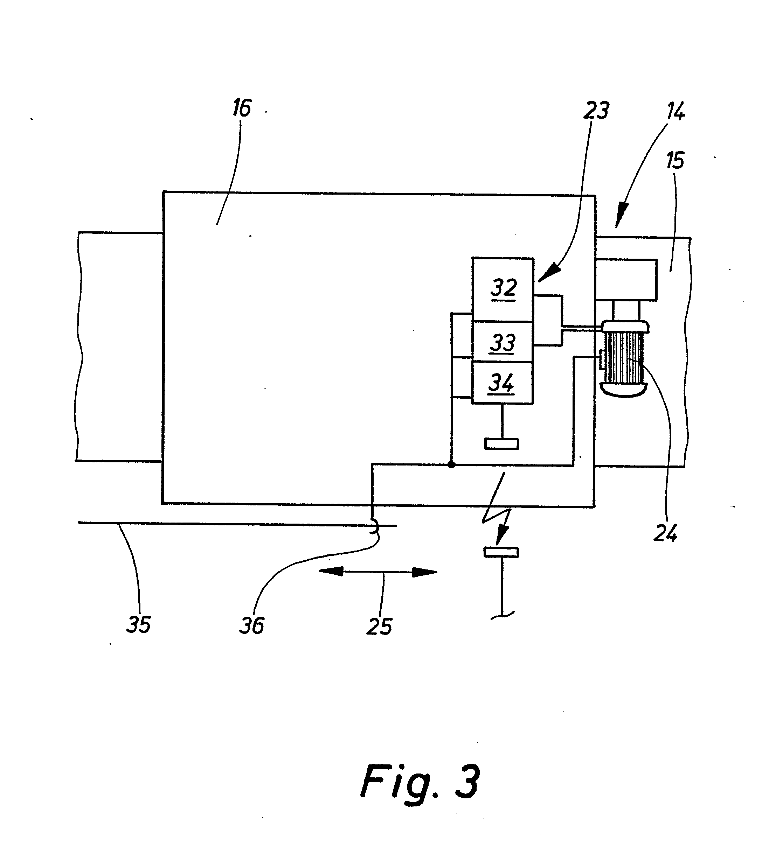

Die Fig. 3 zeigt einen Werkstückträger 16 mit der ihm zugeordneten Steuerungseinrichtung 23. Diese ist im vorliegenden Fall frei programmierbar. Sie setzt sich zusammen aus einem Controller 32 für den Elektromotor 24, einer numerischen Steuerung (NC) 33 und einem Datenspeicher 34. Die Steuerungseinrichtung 23 dient sowohl zur Lageregelung des Werkstückträgers 16 als auch zur Steuerung der Ablauffolge, also zum positions- und zeitgerechten Anfahren der einzelnen Bearbeitungspunkte.

Der Controller 32 empfängt vom Elektromotor 24 die notwendigen Parameter zur Steuerung desselben, nämlich insbesondere die Drehzahl, den Drehwinkel und den Weg. In Abhängigkeit von diesen Größen gibt der Controller 32 entsprechende Fahrbefehle an den Elektromotor 24 ab. Die numerische Steuerung 33 ist ebenfalls mit dem Elektromotor 24 verknüpft. Sie gibt in Abhängigkeit von den im Datenspeicher 34 enthaltenen Daten die für jede Arbeitsstation 11, 12 bzw. 13 vorgegebenen Befehle entweder über den Controller 32 oder - wie hier - direkt an den Elektromotor 24 ab.

Die Einspeicherung entsprechender Daten in den Datenspeicher 34 erfolgt im vorliegenden Ausführungsbeispiel von einer nicht dargestellten Verkettungssteuerung sämtlicher Arbeitsstationen 11, 12 und 13 aus, und zwar über eine drahtlose Übertragung entsprechender Signale, die vorzugsweise digitalisiert sind.

Die Stromversorgung erfolgt im vorliegenden Ausführungsbeispiel über eine einzige Schleifleitung 35, über deren Schleifkontakt 36 sowohl eine Energieversorgung der Steuerungseinrichtung 23 als auch des Elektromotors 24 erfolgt.

Alternativ ist es auch möglich, durch eine weitere, nicht gezeigte Schleifleitung die Datenübertragung zum Datenspeicher 34 vorzunehmen, und zwar vorzugsweise digital. Die Signale dieser Schleifleitung zur Datenübertragung können hierbei von den einzelnen Arbeitsstationen 11..13 kommen, wobei innerhalb einer Arbeitsstation die Signale der Schleifleitung nur für den Werkstückträger 16 dieser Arbeitsstation wirksam sind.

Schließlich ist ein weiteres, nicht gezeigtes Ausführungsbeispiel denkbar, bei dem die gesamte Steuerungseinrichtung 23, also der Controller 32, die numerische Steuerung 33 und der Datenspeicher 34, zentral der Verkettungssteuerung aller Arbeitsstationen 11..13 oder jeder einzelnen Arbeitsstation 11, 12 bzw. 13 zugeordnet ist. Ein Datenträger für die Sollpositionsvorgaben kann dann vor jeder Datenstation oder für mehrere Datenstationen zentral erfolgen. In diesem Falle können die Steuerdaten und Überwachungsparameter vom bzw. zum Elektromotor 24 ebenfalls über eine Funk- oder Schleifleiterübertragung erfolgen.

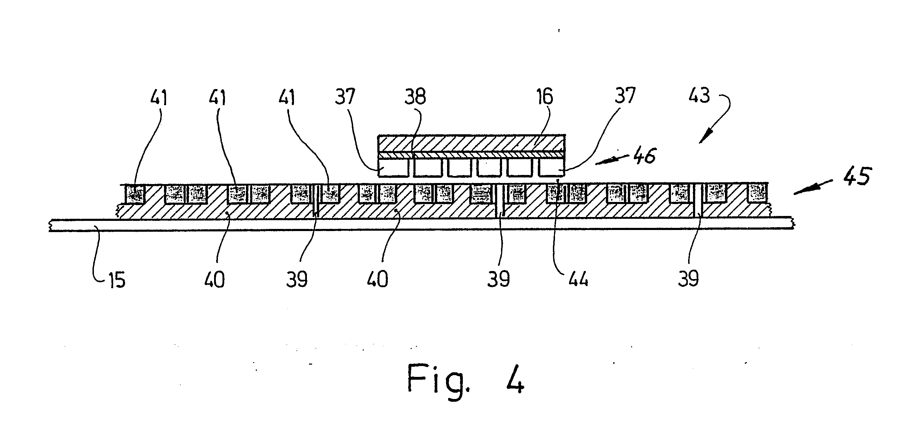

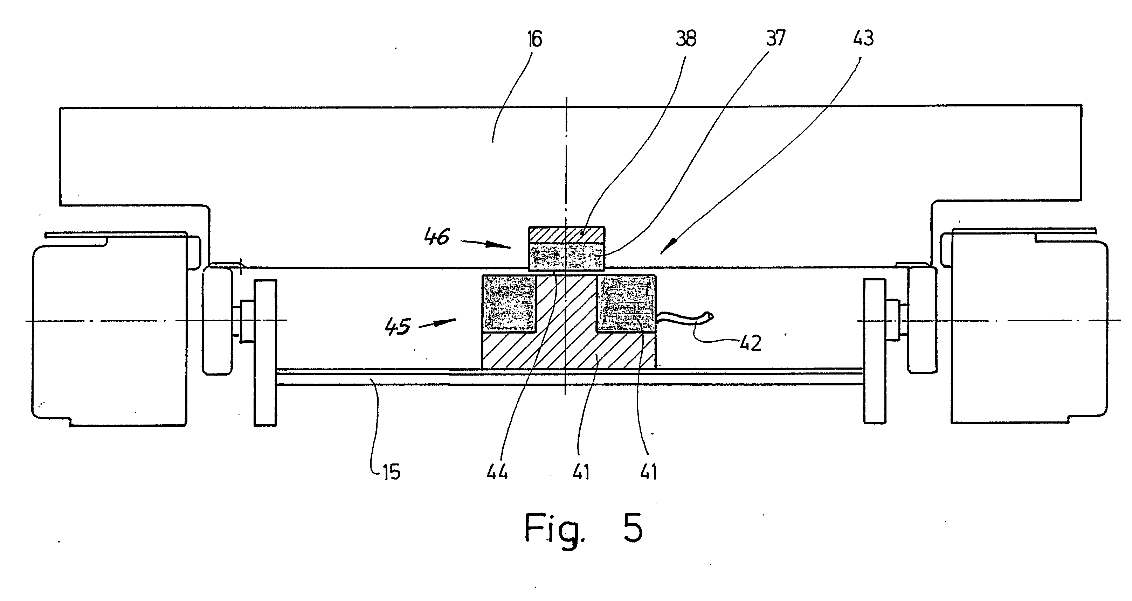

In den Fig. 4 und 5 ist ein besonders vorteilhafter Antrieb der Werkstückträger 16 gezeigt. Hierbei handelt es sich um einen Langstator-Linearmotor 43. Dazu ist die Führungsbahn 15 mit einem Langstator 45 und jeder Werkstückträger 36 mit einem Reaktionsteil 46 des Langstator-Linearmotors 43 versehen.

Der Reaktionsteil 46 wird im gezeigten Ausführungsbeispiel gebildet durch mit gleichmäßigem Abstand hintereinanderliegende Sekundärkörper 37. Diese Sekundärkörper 37 sind mittelbar mit dem Werkstückträger 16 verbunden, nämlich unter einer an der Unterseite des Werkstücksträgers 16 befestigten Leiste 38 angeordnet. Die Sekundärkörper 37 bestehen aus einem ferromagnetischen Weicheisen, wobei die Zwischenräume zwischen den Sekundärkörpern 37 nichtmagnetische (Isolations-)Bereiche bilden. Ebenso besteht die zur Befestigung der Sekundärkörper 37 unterhalb des Werkstück trägers 16 liegende Leiste 38 aus einem nichtmagnetischen Material. Besonders vorteilhaft ist es, auch den gesamten Werkstückträger 16 aus einem nichtmagnetischen Material auszubilden. Dann kann gegebenenfalls die Leiste 38 entfallen, d.h., die Sekundärkörper 37 unmittelbar unter dem Werkstückträger 16 angeordnet sein.

Alternativ kann der Reaktionsteil 46 aus zwei mit Abstand nebeneinanderliegenden Reihen auf Lücke hintereinanderliegender Sekundärkörper 37 bestehen.

Eine weitere alternative Ausführungsform des Reaktionsteils sieht die Anordnung von mit Abstand hintereinander angeordneten Permanentmagneten unterhalb des Werkstückträgers 16 vor. Zweckmäßigerweise sind die Permanentmagnete nicht unmittelbar mit dem Werkstückträger 16 verbunden; vielmehr auf einer unter dem Werkstückträger 16 befestigten Magnetleiste angeordnet.

Der Langstator 45 wird gebildet durch einen Statorkern 40 mit darauf angeordneten Statorwicklungen 41. Diese sind fest der Führungsbahn 15 zugeordnet. Die Stromzufuhr erfolgt durch entsprechende Stromzuführungskabel 42 zum Langstator 45 an der Führungsbahn 15, also zu den feststehenden Teilen des Langstator-Linearmotors 43. Im Gegensatz zu den vorstehend beschriebenen Ausführungsbeipielen können daher eine Stromzufuhr zu den bewegten Teilen, nämlich den Werkstückträgern 16, und die dazu erforderlichen Schleifkontakte entfallen.

Weiterhin verfügt der Langstator 45 über mit gleichmäßigem Abstand zwischen den Statorwicklungen 41 bzw. dem Statorkern 40 angeordnete Sensoren 39. Diese dienen zur Erfassung der jeweiligen Stellung der Sekundärkörper 37 des Reaktionsteils 46. Je nach Stellung der Sekundärkörper 37 erfolgt eine entsprechend abgestimmte Stromzufuhr zu den um den Satorkern 40 herumgewickelten Statorwicklungen 41. Der Vorschub des Langstator-Linearmotors 43, das ist die Bewegung des Reaktionsteils 46 gegenüber dem Langstator 45, wird durch Variation von Spannung und Frequenz mittels eines nicht dargestellten Umrichters geregelt. Dieser Umrichter wiederum wird von Mikroprozessoren gesteuert, welche die Meßsignale der Sensoren 39 verarbeiten.

Der Luftspalt 44 zwischen den Permanentmagneten 37 am Werkstückträger 16 und dem Statorkern 40 bzw. den Statorwicklungen 41 an der Führungsbahn 15 ist kleiner als 6 mm.

Ferner können sowohl der Langstator 45 an der Führungsbahn 15 als auch der Reaktionsteil 46 am Werkstückträger 16 mit einer in den Figuren nicht gezeigten Schutzabdeckung versehen sein. Diese Schutzabdeckung ist aus einem antimagnetischen Werkstoff hergestellt.

### Bezugszeichenliste:

10 Produktionsstraße
11 Arbeitsstation
12 Arbeitsstation
13 Arbeitsstation
14 Transporteinrichtung
15 Führungsbahn
16 Werkstückträger
17 Pfeil
18 Werkstück
19 Bearbeitungswerkzeug
20 Bearbeitungswerkzeug
21 Bearbeitungswerkzeug
22 Meßeinrichtung
23 Steuerungseinrichtung
24 Elektromotor
25 Doppelpfeil
26 Maßband-Träger
27 Abtastkopf
28 Schleifleitung
29 Schleifleitung
30 Schleifkontakt
31 Schleifkontakt
32 Controller
33 numerische Steuerung
34 Datenspeicher
35 Schleifleitung
36 Schleifkontakt
37 Sekundärkörper
38 Leiste
39 Sensor
40 Statorkern
41 Statorwicklung
42 Stromzuführungskabel
43 Langstator-Linearmotor
44 Luftspalt
45 Langstator
46 Reaktionsteil

### Ansprüche

1. Verfahren zur Produktion von Werkstücken auf einer Produktionsstraße (10), wobei die Werkstücke auf insbesondere an ortsfesten Führungsbahnen (15) selbstfahrenden Werkstückträgern (16) zu aufeinanderfolgenden Arbeitsstationen (11,12,13) der Produktionsstraße (10) und aus derselben heraus transportiert werden, **dadurch gekennzeichnet,** daß in den Arbeitsstationen (11,12,13) die Werkstücke (18) durch entsprechendes Verfahren der Werkstückträger (16) in mindestens eine der zu erfolgenden Produktion entsprechende Position relativ zur jeweiligen Arbeitsstation (11,12 bzw. 13) gebracht werden.

2. Verfahren nach Anspruch 1, dadurch gekennzeichnet, daß die Werkstückträger (16) in den Arbeitsstationen (11, 12, 13) in eine oder mehrere bestimmte Positionen relativ zu einem Produktionsorgan (Greifarm, Bearbeitungswerkzeug 19, 20 21) der jeweiligen Arbeitsstation (11, 12, 13) verfahren werden.

3. Verfahren nach Anspruch 1 oder 2, dadurch gekennzeichnet, daß das Verfahren der Werkstückträger (16) im Bereich der Arbeitsstationen (11, 12, 13) auf die Produktionsabläufe derselben abgestimmt wird, insbesondere zu den Produktionsabläufen zeitlich und/oder wegmäßig synchronisiert wird.

4. Verfahren nach Anspruch 1 sowie einem oder mehreren der weiteren Ansprüche, dadurch gekennzeichnet, daß die Werkstückträger (16) im Bereich der Arbeitsstationen (11, 12, 13) in entgegengesetzten Richtungen verfahren werden.

5. Verfahren nach Anspruch 1 sowie einem oder mehreren der weiteren Ansprüche, dadurch gekennzeichnet, daß zusätzlich zum Verfahren der Werkstückträger (16) mindestens die jeweiligen Produktionsorgane (Greifarm, Bearbeitungswerkzeuge 19, 20, 21) der Arbeitsstationen (11, 12, 13) in wenigstens eine Richtung quer zur Führungsbahn (15) der Werkstückträger (16) verfahren werden, wobei vorzugsweise das Verfahren der Werkstückträger (16) zumindest im Bereich der Arbeitsstationen (11, 12, 13) von letzteren aus gesteuert bzw. geregelt wird.

6. Verfahren nach Anspruch 1 sowie einem oder mehreren der weiteren Ansprüche, dadurch gekennzeichnet, daß die Werkstückträger (16) in Abhängigkeit von einem oder mehreren festen Bezugspunkten im Bereich der Arbeitsstationen (11, 12, 13) verfahren und/oder positioniert werden.

7. Verfahren nach einem der Ansprüche 1 bis 6, dadurch gekennzeichnet, daß die Werkstückträger (16) mittels eines Linearmotors verfahren und/oder positioniert werden, insbesondere durch einen Langstator-Linearmotor (43).

8. Produktionsstraße mit einer Mehrzahl von Arbeitsstationen (11,12,13) und einer Transporteinrichtung zur Verbindung derselben aus einer ortsfesten Führungsbahn (15), auf der selbstfahrende Werkstückträger (16) zur Aufnahme mindestens eines Werkstücks angeordnet sind, insbesondere zur Durchführung des Verfahrens nach einem oder mehreren der Ansprüche 1 bis 7, **gekennzeichnet durch** eine Meßeinrichtung (22) und/oder eine Regelungs- bzw. Steuerungseinrichtung (23), die die Werkstückträger (16) im Bereich der jeweiligen Arbeitsstation (11,12,13) führt.

9. Produktionsstraße nach Anspruch 8, dadurch gekennzeichnet, daß die Meßeinrichtung (22) als Weg- und/oder Positionsmeßeinrichtung ausgebildet ist.

10. Produktionsstraße nach Anspruch 8 oder 9, dadurch gekennzeichnet, daß jedem Werkstückträger (16) und/oder jeder Arbeitsstation (11,12,13) eine Meßeinrichtung (22) zugeordnet ist, die sich an einem der jeweiligen Arbeitsstation (11, 12, 13) zugeordneten Meßobjekt (Maßband-Träger 26) orientiert.

11. Produktionsstraße nach Anspruch 8 sowie einem oder mehreren der weiteren Ansprüche, dadurch gekennzeichnet, daß jedem der Werkstückträger (16) eine eigene Regelungs-bzw. Steuerungseinrichtung (23) zugeordnet ist, die vorzugsweise frei programmierbar ist, insbesondere von einer Verkettungssteuerung aller Arbeitsstationen (11, 12, 13) aus.

12. Produktionsstraße nach Anspruch 11, dadurch gekennzeichnet, daß zur Datenübertragung an die Regelungs- bzw. Steuerungseinrichtung (23) und/oder zur Energieversorgung des Antriebs für die Werkstückträger(16) mindestens eine Schliefleitung (28, 29, 35) dient.

13. Produktionsstraße nach Anspruch 11, dadurch gekennzeichnet, daß die Datenübertragung an die Regelungs- bzw. Steuerungseinrichtung (23) auf den jeweiligen Werkstückträger (16) drahtlos, insbesondere durch digitalisierte Funksignale, erfolgt.

14. Produktionsstraße nach einem der Ansprüche 11 bis 13, gekennzeichnet durch einen Langstator-Linearmotor (43) zum Antrieb der Werkstückträger (16), der einen der Führungsbahn (15) zugeordneten Langstator und an der Unterseite der Werkstückträger (16) angeordnete Reaktionsteile, vorzugsweise unterhalb einer durchgehenden Leiste (38) befestigte Sekundärkörper (37) aus ferromagnetischem Weicheisen aufweist.

15. Produktionsstraße nach Anspruch 14, dadurch gekennzeichnet, daß in gleichmäßigen Abständen auf der Führungsbahn (15) Sensoren (39) zur Erfassung der Pollage der Sekundärkörper (37) installiert sind, die mit einer vorzugsweise aus Mikroprozessoren bestehenden Steuereinheit verbunden sind, die zur Variation der Spannung und Frequenz über einen Umrichter den Langstator-Linearmotor (43) steuert.

Fig. 1

*Fig. 2*

**Fig. 3**

Fig. 4

EP 0 294 731 A2

Fig. 5